Europäisches Patentamt

European Patent Office

Office européen des brevets

(11) Veröffentlichungsnummer : **0 160 026**
**B1**

(12) **EUROPÄISCHE PATENTSCHRIFT**

(45) Veröffentlichungstag der Patentschrift :
03.01.90

(21) Anmeldenummer : 84903802.1

(22) Anmeldetag : 26.10.84

(86) Internationale Anmeldenummer :
PCT/CH 84/00171

(87) Internationale Veröffentlichungsnummer :
WO/8502064 (09.05.85 Gazette 85/11)

(51) Int. Cl.⁵ : **H 01 M  4/76**, H 01 M  4/02,
H 01 M  4/04

(54) PLATTENELEKTRODE MIT METALLISCHER ABDECKUNG.

(30) Priorität : 26.10.83 CH 5801/83

(43) Veröffentlichungstag der Anmeldung :
06.11.85 Patentblatt 85/45

(45) Bekanntmachung des Hinweises auf die Patenterteilung : 03.01.90 Patentblatt 90/01

(84) Benannte Vertragsstaaten :
AT BE CH DE FR GB LI LU NL SE

(56) Entgegenhaltungen :
DE—C—  189 630
DE—C— 3 134 309
FR—A—  325 597
FR—A— 2 140 150
FR—A— 2 347 790
GB—A—  800 734
GB—A— 1 553 504
Patents Abstracts of Japan, Band 7, Nr. 226, 7.
Oktober 1983 (E-202) (1371) & JP-A-58117647
Patents Abstract of Japan, Band 4, Nr. 148, 18.
Oktober 1980 (E-30) (630) & JP-A-55100662
Die Akte enthält technische Angaben, die nach dem
Eingang der Anmeldung eingereicht wurden und die
nicht in dieser Patentschrift enthalten sind.

(73) Patentinhaber : **G. BOPP & CO. AG**
**Metallgewebe- und Drahtwarenfabrik Bachmannweg**
**20**
**CH-8046 Zürich (CH)**

(72) Erfinder : **MÜLLER, Max**
**Fadackerstrasse 6**
**CH-8305 Dietlikon (CH)**
Erfinder : **KOLLING, Heinz**
**Sülzburgstrasse 62**
**D-5000 Köln 41 (DE)**

(74) Vertreter : **Rottmann, Maximilian R.**
**c/o Rottmann, Zimmermann + Partner AG Glattals-**
**trasse 37**
**CH-8052 Zürich (CH)**

**Beschreibung**

Die Erfindung betrifft eine Plattenelektrode mit metallischer Abdeckung, die für die Verwendung in alkalischen elektrochemischen Elementen, wie z. B. Nickel-Cadmium-Akkumulatoren, bestimmt ist.

Gegenüber Plattenelektroden für saure elektrochemische Elemente, z. B. Blei-Akkus, unterscheiden sich die Abdeckungen sowohl hinsichtlich des Materials, wie vor allem auch hinsichtlich der Verarbeitungsmöglichkeit und der Form (Metallgewebe !).

Bei bekannten Taschenplatten dieser Art bestehen die Deckwände üblicherweise aus perforiertem Metallblech, z. B. aus vernickeltem Eisenblech. Die meist länglichen Taschen werden einzeln aus perforierten Metallstreifen hergestellt und nach dem Einfüllen der aktiven Masse und Verschliessen durch gegenseitige Verbindung an den Längsrändern (z. B. durch ineinandergreifende Falze) zu einer Taschenplatte zusammengesetzt. Die in der Regel horizontal übereinander angeordneten Taschen sind an den Seitenrändern der Taschenplatte durch Metalleinfassungen verbunden, und ein Metallsteg mit Ableitfahne verbindet die seitlichen Metalleinfassungen am oberen Rand der Taschenplatte.

Die Herstellung einer solchen Taschenplatte ist wegen der zahlreichen Arbeitsgänge recht aufwendig, sowohl in bezug auf die erforderlichen maschinellen Einrichtungen als auch in bezug auf den Arbeitsumfang. Bekanntlich haben Taschenplatten dieser Art aber auch qualitative Mängel, z. B. geringe Massenausnützung, hoher Innenwiderstand, hoher Übergangswiderstand zwischen aktiver Masse und Elektrolyt, mangelhafte Stromableitung zur Ableitfahne und geringes Leistungsgewicht, verglichen mit anderen Elektrodenformen, z. B. Sinterplatten.

Die Patentschrift FR-A 2 140 150 offenbart eine Plattenelektrode, insbesondere für Blei-Akkumulatoren, mit einem Kunststoffgitter als Träger der aktiven Masse. Die aktive Masse bildet dabei einen durchgehenden Belag auf einer Seite oder beiden Seiten des Kunststoffgitters und erstreckt sich in die Gitteröffnungen. An der Aussenseite dieses Belages ist eine Fasermaterialschicht aufgetragen, welche elektrisch leitendes Material für die Stromführung enthält. In dieser Ausführungsform hat die Fasermaterialschicht keine Verbindung zum Kunststoffgitter. Gemäss einer Ausführungsvariante kann die Fasermaterialschicht direkt am Kunststoffgitter angebracht sein und auf ihrer Aussenseite die aktive Masse tragen. Voraussetzung für die mechanische Stabilität einer derart aufgebauten Plattenelektrode ist eine formfeste aktive Masse.

Die Patentschrift FR-A 2 347 790 beschreibt einen Fe/Ni-Akkumulator, bei dem die positiven Elektroden als Plattenelektroden ausgebildet sind, wobei die gepresste pulverförmige aktive Masse zwischen plattengrossen Metallgewebestücken angeordnet ist. Diese Patentschrift enthält jedoch keine Angaben über konstruktive Einzelheiten der Plattenelektrode im Bereich des aktiven Teils derselben. Insbesondere ist daraus nicht ersichtlich, wie die Metallgewebestücke mit der unter erhöhtem Druck verfestigten aktiven Masse verbunden sind und wie der notwendige Kontaktdruck auf die Dauer aufrechterhalten wird.

Die Erfindung bezweckt die Schaffung einer für den angegebenen Zweck geeigneten Plattenelektrode, die sich einfacher und billiger herstellen lässt als herkömmliche Taschenplatten und Sinterplatten und gegenüber diesen, insbesondere gegenüber Taschenplatten, verbesserte Gütemerkmale aufweist.

Zur Lösung dieser Aufgabe weist die erfindungsgemässe Plattenelektrode die im Patentanspruch 1 genannten Merkmale auf.

Die Erfindung betrifft auch ein Verfahren zur Herstellung einer solchen Plattenelektrode. Die erfindungsgemässen Verfahrensschritte sind im Patentanspruch 3 angegeben.

Die metallische Abdeckung der erfindungsgemässen Plattenelektrode dient als druckfeste Behälterwand für den notwendigen Einschluss der formlosen aktiven Masse und als Stromableiter. Dieselben Funktionen hat anscheinend auch die Metallgewebeabdeckung nach der FR-A 2 347 790. Die Plattenelektrode nach der FR-A 2 140 150 benötigt dagegen keine Behälterwand, da die aktive Masse derselben in getrocknetem Zustand offenbar einen formfesten Körper bildet. Die Funktion des Stromableiters übernimmt hier z. B. eine metallisierte Faserschicht, die sowohl an der Aussenseite des Belages aktiver Masse als auch innerhalb desselben angeordnet sein kann. Diese Faserschicht könnte mangels genügender mechanischer Stabilität keinesfalls die Funktion einer Behälterwand im Sinne der erfindungsgemässen Lösung ausüben und ist nach dem Inhalt der FR-A 2 140 150 auch nicht dafür vorgesehen. Der Ersatz der einzig der Stromableitung dienenden und offenbar des geringen Gewichts wegen gewählten Faserschicht durch eine schwere Metallgewebeabdeckung hätte demnach keinen erkennbaren Zweck.

Andererseits hat das Kunststoffgitter nach der FR-A 2 140 150 einzig die Funktion eines Trägergerüstes für die aktive Masse, das für die Herstellung der Platte benötigt wird. Die Anordnung eines solchen Kunststoffgitters in dem von der aktiven Masse belegten Zwischenraum der Metallgewebeabdeckung nach der FR-A 2 347 790 würde ohne weiter erkennbaren Effekt lediglich zu einer Volumenverminderung der aktiven Masse und gegebenenfalls zu einer Unterteilung derselben in einzelne Massefelder führen. Offenbar lassen sich also auch mit dieser Kombination keine Verbesserungen der Platteneigenschaften erzielen, wie sie mit den Massnahmen nach der Erfindung beabsichtigt sind.

Durch die Verwendung von Metallgewebe anstelle von perforiertem Metallblech für die Deckwände kann der Durchlassquerschnitt pro Flächeneinheit etwa auf das Dreifache und mehr erhöht werden. Dies ermöglicht eine bessere Ausnützung der aktiven Masse und ergibt einen geringeren Übergangswiderstand zwischen aktiver Masse und Elektrolyt. Damit wird auch eine höhere Entladespannung erreicht. Die Stromableitung zur Ableitfahne erfolgt unmittelbar über die Drähte der Metallgewebestücke, und zwar unabhängig von der Orientierung der Massefelder, womit die bei bekannten Taschenplatten unvermeidlichen und oft mit der Zeit sich ändernden Übergangswiderstände zwischen den Taschen und den Metalleinfassungen entfallen. Daraus resultiert ein geringerer Innenwiderstand, dessen Grösse zudem praktisch konstant bleibt. Überdies sind keine Metalleinfassungen erforderlich.

Die Metallgewebestücke bestehen vorzugsweise aus einheitlichem, überzugsfreiem Drahtmaterial, z. B. aus Nickeldraht. Dadurch wird eine bei den bekannten Taschenplatten mit Deckwänden aus vernickeltem Eisenblech auftretende Kontamination der aktiven Masse mit Eisen vermieden, was eine Erhöhung der Zyklen-Lebensdauer zur Folge hat.

Da Metallgewebe leichter ist als perforiertes Metallblech, lässt sich mit der erfindungsgemässen Plattenelektrode auch eine Gewichtsersparnis und damit ein höheres Leistungsgewicht der damit ausgerüsteten eletrochemischen Elemente erzielen.

Die erfindungsgemässe Plattenelektrode ist wesentlich einfacher und mit weniger aufwendigen Mitteln herstellbar, da eine Vorfertigung und ein Zusammenbau einzelner Taschen entfällt. Sie kann praktisch in einem Arbeitsgang hergestellt werden. Darüber hinaus besteht die Möglichkeit, aus zwei Metallgewebebahnen und einer Kunststoff-Gitterbahn Plattenelektroden in Endlosverfahren herzustellen und im verpressten und verschmolzenen Zustand voneinander zu trennen, was zu einer beträchtlichen Verminderung der Herstellungskosten führt.

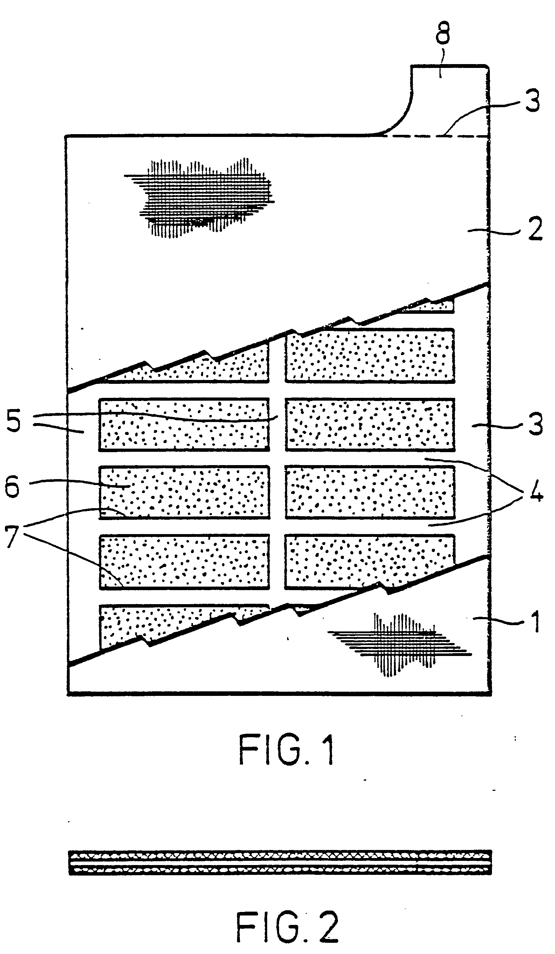

In der Zeichnung ist ein Ausführungsbeispiel der erfindungsgemässen Plattenelektrode dargestellt. Zur besseren Veranschaulichung ihres Aufbaus sind die aufeinanderliegenden Materialschichten in der Darstellung teilweise weggebrochen.

Bei dieser Plattenelektrode sind die Deckwände durch zwei plattengrosse Metallgewebestücke 1 und 2 gebildet. Dazwischen ist ein Gitter 3 aus thermoplastischem Kunststoff angeordnet, dessen Gitteröffnungen durch Balken 4 und Stege 5 begrenzte Felder 7 bilden, in denen sich die aktive Masse 6 befindet. Die Metallgewebestücke 1 und 2 sind in nicht näher dargestellter Weise in das Kunststoff-Gitter 3 eingeschmolzen, so dass die Massefelder 7 allseitig abgeschlossen sind. Die Ableitfahne 8 wird durch Fortsätze der Metallgewebestücke 1 und 2 gebildet, welche unmittelbar miteinander oder mit einem dazwischen liegenden Teil einer Ableitung verschweisst werden können. Die Metallgewebestücke 1 und 2 und das Kunststoff-Gitter 3 haben gleiche Aussenabmessungen, abgesehen von der kunststofffreien Ableitfahne 8. Anzahl, Form, Grösse und Orientierung der Massefelder 7 und damit die Anordnung der Balken 4 und der fakultativ vorhandenen Mittelstege 5 des Kunststoff-Gitters 3 richten sich vor allem nach der Grösse und dem Format der Plattenelektrode. Die Massefelder können anstatt eckig auch rund sein, so dass auf herkömmliche Weise hergestellte runde Massetabletten eingesetzt werden können.

Das Kunststoff-Gitter 3 besteht beispielsweise aus Polyäthylen, Polypropylen, Polyvinylchlorid oder Polystyrol und wird entweder aus Folienmaterial ausgestanzt oder im Spritzverfahren hergestellt.

Die aktive Masse kann in Pulverform, als Paste oder in Tablettenform vorliegen. Am geeignetsten in bezug auf einheitliche Dosierung und Dichte der Masse sind Tabletten, die bei der Herstellung der Plattenelektrode auch am besten zu handhaben sind.

Bei der Herstellung der beschriebenen Plattenelektrode wird zunächst das Kunststoff-Gitter 3 auf ein Metallgewebestück 1 aufgelegt und dann die aktive Masse 6 in die Gitteröffnungen bzw. Felder 7 eingetragen. Darüber wird ein zweites Metallgewebestück 2 gelegt. Hierauf wird das ganze Plattenpaket unter Wärmeeinwirkung ganzflächig zusammengepresst, so dass die Metallgewebestücke 1 und 2 in das Kunststoff-Gitter 3 eingeschmolzen werden. Zugleich wird die aktive Masse 6 (im Falle von Tabletten noch mehr) komprimiert. Die erforderliche Wärme kann beispielsweise durch Ultraschallwellen erzeugt werden. Der Pressdruck muss so gross ein, dass einerseits die Metallgewebestücke richtig miteinander verbunden werden und andererseits die aktive Masse in ausreichendem Masse komprimiert wird.

Auf die beschriebene Weise lassen sich Plattenelektroden mit sehr geringer Dicke (1 mm und weniger) herstellen. Ein weiterer Vorzug der erfindungsgemässen Plattenelektrode besteht darin, dass ein Recycling mit weit weniger Arbeitsaufwand bewerkstelligt werden kann, als dies bei herkömmlichen Taschenplatten der Fall ist.

## Patentansprüche

1. Plattenelektrode mit metallischer Abdeckung für alkalische elektrochemische Elemente, wobei die Deckwände durch zwei plattengrosse Metallgewebestücke (1, 2) gebildet sind, dadurch gekennzeichnet, dass zwischen den Deckwänden ein Gitter (3) aus thermoplastischem Kunststoff angeordnet ist, dessen Gitteröffnungen (7) aktive Masse (6) enthalten, und dass die Metallgewebestücke (1, 2) in das Kunststoff-Gitter (3) eingeschmolzen sind, so dass die Gitteröffnungen (7) allseitig abgeschlossen sind und die Deckwände (1, 2) einen dauerhaften Druck auf die aktive Masse (6) ausüben.

2. Plattenelektrode nach Anspruch 1, dadurch gekennzeichnet, dass die Metallgewebestücke (1, 2) aus einheitlichem, überzugsfreiem Drahtmaterial, beispielsweise Nickel, bestehen.

3. Verfahren zur Herstellung einer Plattenelektrode nach Anspruch 1, dadurch gekennzeichnet, dass das Kunststoff-Gitter (3) auf ein Metallgewebestück (1) aufgelegt, in die Gitteröffnungen (7) aktive Masse (6) eingetragen und danach ein zweites Metallgewebestück (2) darüber gelegt wird, und dass hierauf das ganze Plattenpaket unter Wärmeeinwirkung ganzflächig zusammengepresst wird, so dass die Metallgewebestücke (1, 2) in das Kunststoff-Gitter (3) eingeschmolzen werden und zugleich die aktive Masse (6) komprimiert wird.

4. Verfahren nach Anspruch 3, dadurch gekennzeichnet, dass als Metallgewebestücke (1, 2) solche aus einheitlichem, überzugsfreiem Drahtmaterial, beispielsweise Nickel, eingesetzt werden.

5. Verfahren nach Anspruch 3, dadurch gekennzeichnet, dass aus zwei Metallgewebebahnen und einer Kunststoff-Gitterbahn Plattenelektroden im Endlosverfahren hergestellt und im verpressten und verschmolzenen Zustand voneinander getrennt werden.

## Claims

1. Plate electrode with metal coating for alkaline electrochemical cells, the cover walls being comprised of two metal fabric pieces (1, 2) having the size of a plate, characterised in that between the cover walls there is disposed a thermoplastic synthetic material grid (3), the openings (7) of which contain active mass (6), and that the metal fabric pieces (1, 2) are melted in the plastic grid (3) so that the grid openings (7) are occluded on all sides and the cover walls (1, 2) exert permanent pressure on the active mass (6).

2. Plate electrode according to claim 1, characterised in that the metal fabric pieces (1, 2) are made from uniform, uncoated wire material, for example nickel.

3. Method for manufacturing a plate electrode according to claim 1, characterised in that the plastic grid (3) is placed on a metal fabric piece (1), active mass (6) is applied in the grid openings (7) and thereafter a second metal fabric piece (2) placed thereon, and that the entire plate assembly is then pressed throughout its surface by thermal operation so that the metal fabric pieces (1, 2) are melted in the plastic grid (3) and at the same time the active mass (6) is compressed.

4. Method according to claim 3, characterised in that the metal fabric pieces (1, 2) employed are made from uniform, uncoated wire material, for example nickel.

5. Method according to claim 3, characterised by manufacturing plate electrodes from two webs of metal fabric and a web of plastic grid in a continuous process and separating them from one another in the compressed and fused state.

## Revendications

1. Electrode à plaque avec revêtement métallique pour des éléments électrochimiques alcalins, les parois étant formées par deux pièces de toile métallique (1, 2) de la dimension d'une plaque, caractérisée en ce qu'on dispose entre les parois de recouvrement une grille (3) en matière synthétique thermoplastique, dont les ouvertures (7) contiennent de la masse active (6), et en ce que les pièces de toile métallique (1, 2) sont fondues dans la grille en matière synthétique (3), de sorte que les ouvertures (7) de la grille sont fermées de tous côtés et les parois de recouvrement (1, 2) exercent une pression constante sur la masse active (6).

2. Electrode à plaque selon la revendication 1, caractérisée en ce que les pièces de toile métallique (1, 2) sont composées d'un matériau en fil métallique homogène et exempt de revêtement, par exemple du nickel.

3. Procédé de fabrication d'une électrode à plaque selon la revendication 1, caractérisé en ce que la grille en matière synthétique (3) est posée sur une pièce de toile métallique (1), de la masse active (6) est introduite dans les ouvertures (7) de la grille, puis une deuxième pièce de toile métallique (2) est placée sur l'ensemble, et en ce que l'ensemble de plaques est ensuite assemblé par pression sur toute la surface sous l'action de la chaleur, de sorte que les pièces de toile métallique (1, 2) sont fondues dans la grille en matière synthétique (3) et que, dans le même temps, la masse active (6) est comprimée.

4. Procédé selon la revendication 3, caractérisé en ce que les pièces de toile métallique (1, 2) utilisées sont composées d'un matériau en fil métallique homogène et exempt de revêtement, par exemple du nickel.

5. Procédé selon la revendication 3, caractérisé en ce qu'on fabrique des électrodes à plaques selon un procédé continu à partir de deux bandes de toile métallique et d'une bande de grille en matière synthétique, et en ce qu'on les sépare les unes des autres à l'état comprimé et fondu.

FIG. 1

FIG. 2